# EUROPEAN PATENT APPLICATION

(11) **EP 4 782 089 A1**
(43) Date of publication of application: **29.07.2026**
(21) Application number: 25382037.7
(22) Date of filing: 23.01.2025
(51) Int. Cl.: B01D 53/14, B01D 53/30, C10L 3/10

(54) **DEVICE AND METHOD FOR CONVERTING BIOGAS INTO BIOMETHANE THROUGH CARBONATES ABSORPTION-DESORPTION STAGES**

(71) Applicant: FCC Aqualia, S.A., 28050 Madrid (ES)
(72) Inventor: LARA CORONA, Enrique, 41003 Sevilla (ES); ARBIB, Zouhayr, 29649 Mijas (Málaga) (ES); MUÑOZ TORRE, Raul, 47011 Valladolid (ES)
(74) Representative: Ungria López, Javier

(57) **Abstract**

System and method for cleaning and upgrading biogas into biomethane in a sustainable way by means of absorption in a carbonates-bicarbonates solution and subsequent regeneration of said solution by desorption; wherein the resulting biomethane has a quality for injection into the natural gas grid. The overall process operates at atmospheric pressure and ambient temperature by increasing reaction rates and without applying neither heat nor pressure, or addition of any absorption promoter. Any known sulphide pre-cleaning step is not needed. The claimed system comprises four or more high mass transfer bubble columns with a counter-current configuration, filled with plastic media and operating at different pH ranges, two for absorption and two for CO₂ desorption by air stripping, in which the reaction rate in the carbonates-bicarbonates solution is increased. The invention also comprises the implementation of control strategies.

## Description

### FIELD OF THE INVENTION

This invention relates to the field of chemical processes, specifically configured to clean impurities and upgrade the biogas flow produced during anaerobic digestion, to be used as a renewable natural gas (RNG) with the quality standards required for injection into the natural gas grid.

### BACKGROUND OF THE INVENTION

The resulting product of anaerobic digestion, which is commonly called biogas, is a mixture primarily composed of methane and carbon dioxide, and usually undesired substances such as water, hydrogen sulphide, ammonia, oxygen, siloxanes, volatile organic compounds, and particulate matter, among others.

On the technical side, cleaning and upgrading raw biogas into biomethane with the quality standards required for injection into the natural gas grid require meeting numerous gas quality specifications, which can vary by national regulations or pipeline system, and can be difficult to achieve cost-effectively depending on the biogas source.

Thus, raw biogas typically contains between 45 and 65 mol %CH₄ depending on the feedstock and type of anaerobic digestion process, while methane content for gas grid injection is often required to be greater than 90 mol % depending on the specification for the national regulations or pipeline system, most often greater than 95 mol%. Another important parameter is CO₂, which is most often limited to 2 mol%.

Many natural gas utilities have also strict limits on O₂ for biomethane that is injected into a pipeline network. Excessive amounts of O₂ can accelerate pipeline infrastructure corrosion, resulting in many utilities setting the upper limit of allowable O₂ to 0.3 mol%.

As a consequence, cleaning and upgrading raw biogas to RNG requires cost-effective (low capital and operating costs with low energy, low water and chemical consumption) technologies to meet the following gas quality specifications commented above:
- Methane > 95 mol %;
- Carbon dioxide < 2 mol %,
- Oxygen < 0.3 mol%.
- Total sulphur > 20 mg/Nm3
- Water dew point higher than -10°C at 200 bar, according to ISO 6327
- Siloxanes<10 mg/m3

Raw biogas must go through a series of steps to meet those specifications, pre-cleaning and upgrading, said steps being hereby commented:
- Pre-cleaning stage, which should be understood as removing the undesired compounds, mainly hydrogen sulphide, before the upgrading step in order to prevent corrosion and mechanical wear of the upgrading equipment itself. In addition, hydrogen sulphide can cause problems during the removal of carbon dioxide and it involves problems of bad odors.
- Biogas upgrading stage, which refers to removal of carbon dioxide from biogas. The energy content of biogas is in direct proportion to the methane concentration, in such a way that the energy content of the gas is increased by removing carbon dioxide in the upgrading process, making RNG comparable to natural gas.

There are several technologies for biogas upgrading, among which absorption and desorption processes stand out. A brief description of the most relevant technologies is disclosed below:

### 1. Pressurized Water absorption

Pressurized water absorption units consist of an absorption column coupled to a stripping process to regenerate water (up to tap quality). The absorption column is usually packed with random rings to increase the gas-liquid contact area and typically operates at high pressures (6-10 bar) under counter-current configuration. The means for the stripping process is composed of a flash unit that operates at a pressure range of 2-4 bar and a desorption unit, wherein water is decompressed and regenerated by the injection of air, which entails the selective desorption of CO₂ (Muñoz et al., 2015).

Additionally, H₂S pre-cleaning is strongly needed prior to CO₂ absorption to extend the lifetime of the equipment and prevent the accumulation of elemental sulfur and undesired odors (Muñoz et al., 2015).

### 2. Amine absorption

Most commercial amine solvents include MDEA (methyldiethanolamine), aMDEA (activated MDEA) and DEA (diethanolamine). In amine scrubbing, the amine solution flows downward, against (i.e. in countercurrent) raw biogas (which flows upwards). Due to the exothermic reaction with CO₂, the temperature increases from 20°C to 45°C up to 65°C. As the reaction speed increases and the reaction temperature rises, so does the amine solution's ability to absorb CO₂. Then, the CO₂ and H₂S-saturated aqueous amine solution exits through the bottom of the absorption column and passes through a heat-transfer column, before entering the stripper column and being heated to 120°C to 160°C. After regeneration and prior to reuse in the absorption column, the sorbent is cooled down to 20°C (Muñoz et al., 2015; Nayeem et al., 2024; Upadhyay et al., 2023).

Major disadvantages of amine scrubbing include foaming and O₂ poisoning of amine and other chemicals. Furthermore, H₂S must be removed prior to chemical scrubbing because of amine poisoning (Awe et al., 2017). Besides absorbent degradation, by-products such as organic acids and stable amine salts increase corrosion risk, which can be mitigated via addition of corrosion inhibitors (Krzemień et al., 2016). The amine absorption/stripping technology is an energy-intensive process, due to desorption temperatures required.

### 3. Caustic absorption

Caustic absorption process typically uses NaOH and KOH solutions, although NaOH is the preferred alkali since it has demonstrated better CO₂ removals and it is easier to regenerate (Gallego-Fernández et al., 2024). The use of caustic solvents has demonstrated similar performances than MEA, with the advantage of being less toxic, cheaper and commercially available. The process is also carried out in a counter current packed absorption column and the efficiency depends on operational parameters such as pH, pressure and NaOH concentration. For instance, CO₂ removal efficiencies of 60-99% have been reported at NaOH concentrations of 1-20 g L-1 (Rattanaya et al., 2021). The caustic absorption process can be described by Equation (1).

CO₂+NaOH→Na₂CO₃(s)+H₂O (1)

The regeneration stage of caustic solutions is one of the major drawbacks since the decomposition of Na₂CO₃ to Na₂O requires a high temperature (800 °C), and usually, the addition of CaO or lime is necessary to reduce the energy regeneration demand.

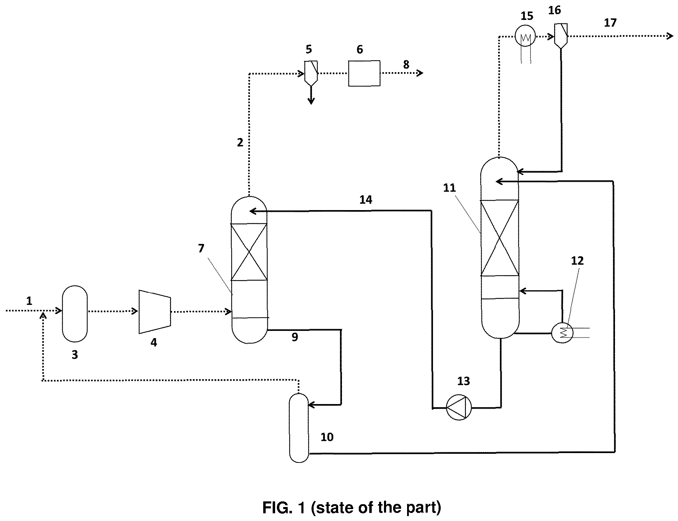

### 4. Carbonated solutions absorption (closest prior art, figure 1)

Carbonate solutions, typically composed of sodium carbonate (Na₂CO₃) and potassium carbonate (K₂CO₃), are used to absorb the CO₂ contained in biogas. Carbonate solutions entail low corrosion and low volatility; however, the absorption rate is low compared to other chemical methods (Abdeen et al., 2016). Carbonate absorption is typically conducted at high pressure and the process is mainly governed by the chemical reaction shown in Eq. (2).

CO_{2 (g)} + K₂CO₃ + H₂O ↔ 2KHCO₃ (2)

Carbonated solutions usually operate in a pressure swing absorption-desorption process but poor CO₂ removals, around 40%, have been obtained. In this way, several techniques to improve carbonate-based absorption such as the addition of an absorption promoter, i.e. amines, amino acids, boric acid, or applying heat have been proposed.

Recently, absorption in hot potassium carbonate (figure 1, state of the art) has been introduced as a feasible technique to improve the low CO₂ removal yields. The biogas upgrading unit for this case, as known in the art, is described in Fig. 1: Raw biogas flow to upgrade (1) is first pre-cleaned in a filter (3) by removing H₂S and moisture, and after compression in a high-pressure compressor (4), pre-cleaned and compressed biogas flow reaches an absorption column (7) consisting of a column with inner metal random packing. The absorption column (7) is operating between 5 and 12 bar at 60-90 °C. In column (7), biogas flow is washed in a countercurrent mode with a K₂CO₃ aqueous solution. According to reaction described in Eq. 2, CO₂ is absorbed and KHCOs is produced, while a flow of purified biomethane (2) is collected at the top of the absorption column (7), exiting the column. Subsequently, a flow (8) of biogas upgraded to gas grid injection quality is obtained after condensate removal of purified biomethane (2) in a condensate separator (5) and gas drying and purification stage in device (6). The operational liquid to gas ratio is about 0.02 m³ of liquid per Nm³ of gas. The KHCOs solution rich in CO₂ produced in the column (7) is continuously sent through a pipe (9) to a desorption column (11), wherein the reaction of Eq. 2 is performed backward by reducing the pressure and increasing the temperature at 1 bar and 100-105°C by a heating device (12).

This results in the regeneration of the K₂CO₃ solution, with a release of CO₂ as off-gas (17) after going through a CO₂ cooler (15) and a condensate separator (16). The upgrading unit also contains a flashing vessel (10) between the absorption column (7) and the desorption column (11), connected to the pipe (9), in order to further reduce the methane slip. A pump (13) sends the lean CO₂ solution obtained in the desorption column (11) back to the absorption packed column (7) through a pipe (14).

CO₂ removal efficiencies of 96% have been obtained in an experimental reactor of this type operating at 5-12 bar and 60-90 °C and a L/G ratio of 0.01-0.02 (Paolini et al., 2021).

Carbonate absorption has various advantages versus other absorption processes, such as:
- carbonates solutions are non-hazardous and non-volatile;
- low equipment corrosion rate; and
- solvent will not cause the piping system to foul.

On the contrary, carbonate absorption process has various associated drawbacks:
1. Slower absorption rate of CO₂ in comparison to amine solutions, and poor CO₂ removals, around 40%, have been obtained. In this way, several techniques to improve carbonate-based absorption such as the addition of an absorption promoter, i.e., amines, amino acids, boric acid have been proposed but it also increases the energy needed for regeneration in the desorption column. Another technique to improve absorption rate is applying heat and pressure as described above, but this also results in high energy consumption.
2. High-energy requirements in the regeneration or CO₂ desorption process in carbonate absorption is the largest obstacle for preventing its industrial applications. Conventional regenerations are just carried out by heating above boiling temperatures (100-105 °C). Current available upgrading technologies by absorption, like the ones explained above, are energy intensive from 0.3 to 0.6 kWh per Nm³ of raw biogas upgraded. In the case of carbonate absorption, the electrical power consumption is about 0.2 kWh/Nm³ biogas while thermal consumption has been reported 0.67 kWh/Nm³ raw biogas upgraded, mainly related to the regeneration of the solution. (Elena Barbera et al. 2019).
3. The process requires sulphide pre-cleaning stage to avoid corrosion and packing clogging problems; the sulphide removal being a high-cost process.
4. High capital costs related to its complexity with high pressure compressors tall and pressurized packing columns and heating devices.
5. Clogging by chemicals due to precipitation in the packed columns.
6. High operating costs mainly related to high energy requirements.

With the aim of overcoming these drawbacks, the present invention provides an implemented method and facilities for carrying out thereof.

### REFERENCES

Abdeen, F. R. H., Mel, M., Jami, M. S., Ihsan, S. I., & Ismail, A. F. (2016). A review of chemical absorption of carbon dioxide for biogas upgrading. Chinese Journal of Chemical Engineering, 24(6), 693-702. https://doi.org/https://doi.org/10.1016/j.cjche.2016.05.006
Awe, O. W., Zhao, Y., Nzihou, A., Minh, D. P., & Lyczko, N. (2017). A Review of Biogas Utilisation, Purification and Upgrading Technologies. Waste and Biomass Valorization, 8(2), 267-283. https://doi.org/10.1007/s12649-016-9826-4
Elena Barbera, Silvia Menegon, Donatella Banzato, Chiara D'Alpaos, Alberto Bertucco, From biogas to biomethane: A process simulation-based techno-economic comparison of different upgrading technologies in the Italian context, Renewable Energy, Volume 135, 2019,
Gallego-Fernández, L. M., Portillo, E., Borrero, F. V., Navarrete, B., & Vilches, L. F. (2024). Chapter 2 - CO2 capture for biogas upgrading using salts, hydroxides, and waste. In F. M. Baena-Moreno, J. González-Arias, T. Ramírez-Reina, & L. Pastor-Pérez (Eds.), Circular Economy Processes for CO2 Capture and Utilization (pp. 7-24). Woodhead Publishing. https://doi.org/https://doi.org/10.1016/B978-0-323-95668-0.00005-9
Krzemierń, A., Wi 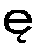 ckol-Ryk, A., Smoliński, A., Koteras, A., & Wi 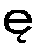 c 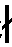 aw-Solny, L. (2016). Assessing the risk of corrosion in amine-based CO2 capture process. Journal of Loss Prevention in the Process Industries, 43, 189-197.
Muñoz, R., Meier, L., Diaz, I., & Jeison, D. (2015). A review on the state-of-the-art of physical/chemical and biological technologies for biogas upgrading. Reviews in Environmental Science and Biotechnology, 14(4), 727-759. https://doi.org/10.1007/s11157-015-9379-1
Nayeem, A., Shariffuddin, J. H., & Yousuf, A. (2024). Chapter 3 - Absorption technology for upgrading biogas to biomethane. In A. Yousuf & L. Melville (Eds.), Biogas to Biomethane (pp. 69-84). Woodhead Publishing. https://doi.org/https://doi.org/10.1016/B978-0-443-18479-6.00005-3
Valerio Paolini, Marco Torre, Walter Giacopini, Maurizio Pastori, Marco Segreto, Laura Tomassetti, Monica Carnevale, Francesco Gallucci, Francesco Petracchini, Ettore Guerriero, CO2/CH4 separation by hot potassium carbonate absorption for biogas upgrading, International Journal of Greenhouse Gas Control, Volume 83, 2019.
Rattanaya, T., Manmeen, A., Kongjan, P., Bunyakan, C., Reungsang, A., Prasertsit, K., Lombardi, L., & Jariyaboon, R. (2021). Upgrading biogas to biomethane using untreated groundwater-NaOH absorbent: Pilot-scale experiment and scale-up estimation for a palm oil mill. Journal of Water Process Engineering, 44, 102405. https://doi.org/https://doi.org/10.1016/j.jwpe.2021.102405.
Upadhyay, A., Kovalev, A. A., Zhuravleva, E. A., Kovalev, D. A., Litti, Y. V, Masakapalli, S. K., Pareek, N., & Vivekanand, V. (2023). Recent Development in Physical, Chemical, Biological and Hybrid Biogas Upgradation Techniques. In Sustainability (Vol. 15, Issue 1). https://doi.org/10.3390/su15010476.

### DESCRIPTION OF THE INVENTION

The first object of the invention, according to claim 1, is a method for cleaning and upgrading (a flow of raw) biogas by means of an absorption-desorption process at atmospheric pressure and at ambient temperature (5°C-30°C, depending on the latitude, generally named "room temperature"). This is an innovative process, based on absorption and desorption stages like those of the prior art but operating at ambient conditions, that is, without applying neither heat nor pressure, without addition of an absorption promoter and without the need of a pre-cleaning stage. The process overcomes the problems identified in currently available systems in a sustainable way.

A second object of the invention, according to claim 7, is a unit or installation for cleaning and upgrading biogas to obtain biomethane having quality for being injected into the natural gas grid, following the method of claim 1.

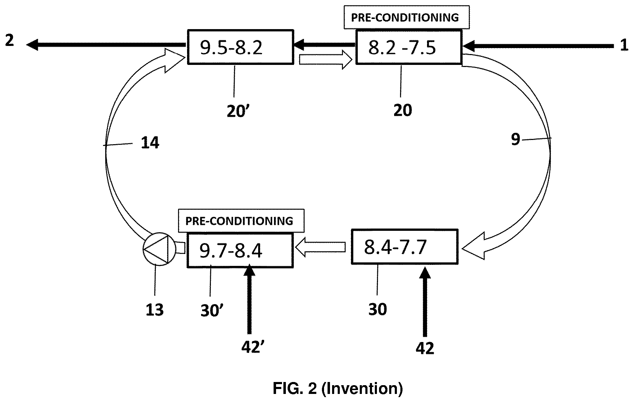

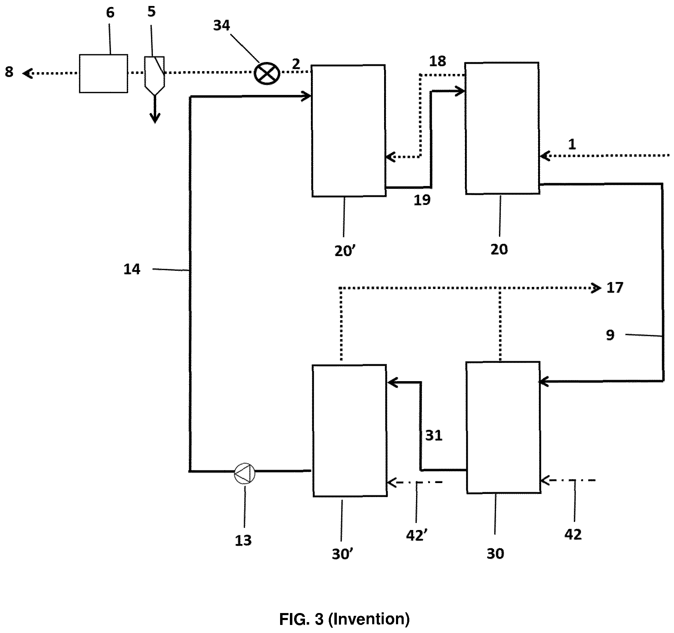

The method for cleaning and upgrading biogas through carbonates absorption-desorption stages, to obtain high-quality biomethane for being injected into the natural gas grid, is illustrated in figures 2 and 3 and comprises the following steps:
a) an absorption stage, consisting of two or more sequential sub-stages (20, 20'), wherein:
   ∘ a flow (1) of raw biogas to be upgraded is subjected to a first absorption sub-stage (20) at a pH lower than 8.2, for biogas pre-conditioning, using a counter-current flow of a carbonates-bicarbonates solution (19), the first sub-stage resulting in a flow of enriched biogas (18) and a flow of carbonates-bicarbonates solution enriched with CO₂ (9);
      and
   ∘ the flow of enriched biogas (18) extracted from the first sub-stage (20) is subjected to a second absorption sub-stage (20') at a pH equal to or greater than 8.2, using a counter-current flow of a carbonates-bicarbonates solution (14); the second absorption sub-stage (20') resulting in a flow of biomethane (2) to purification and the carbonates-bicarbonates solution flow (19) that is sent in counter-current to the first absorption sub-stage (20);
b) a CO₂ desorption stage, consisting of two or more sequential sub-stages (30, 30'), wherein:
   ∘ the carbonates-bicarbonates solution enriched with CO₂ (9) at the first absorption sub-stage (20) is directed to a first desorption sub-stage (30) by air stripping with an air flow (42), at a pH below 8.4, resulting in a flow of carbonates-bicarbonates solution (31) having a reduced CO₂ content with respect to the inlet solution flow;
      and
   ∘ the flow of carbonates-bicarbonates solution (31) obtained from the first desorption sub-stage (30) is subjected to a second desorption sub-stage (30') by air stripping with an air flow (42') at a pH equal to or greater than 8.4, for solution pre-conditioning, resulting in a carbonates-bicarbonates lean-CO₂ solution (14) that is sent to the second absorption sub-stage (20') in counter-current;
c) a controlling stage of the flow of biogas at the absorption stage, comprising:
   ∘ measuring the gas pressure at the absorption sub-stages (20, 20'), and
   ∘ acting over the flow of biogas injected into the absorption sub-stages (20, 20') by varying the flow rate according to the gas pressure, in order to keep the pressure at a constant value which is atmospheric pressure;
      and
d) a controlling stage for adapting the absorption stage a) and the desorption stage b) to environmental conditions, comprising:
   ∘ measuring CO₂ concentration in the biomethane flow (2) resulting from the second absorption stage (20');
   ∘ acting over the solution flow (14) exiting the second desorption sub-stage (30') for increasing or decreasing the L/G ratio, by increasing or decreasing the solution flow (14) rate in order to maintain the CO₂ concentration below 2 mol % in the biomethane flow (2);
   ∘ measuring the pH in the solution flows (14, 31) resulting from the desorption sub-stages (30, 30') for increasing the air flow (42, 42') rate if the pH value is lower than the lower limit of the required range, and for lowering the air flow (42, 42') rate if the pH value is higher than the upper limit of the required range;
   ∘ measuring the O₂ concentration in the biomethane flow (2) exiting the second absorption sub-stage (20'), which must be equal or lower than 0.3 mol %; and
   ∘ removing O₂ content from the lean CO₂ solution flow (14) exiting the second desorption sub-stage (30'), when the O₂ concentration in the biomethane flow (2) reaches or is higher than 0.3 mol %;
wherein the absorption (20, 20') and desorption sub-stages (30, 30') are carried out at room temperature and atmospheric pressure, and the carbonates-bicarbonates solution (14) has a total carbonate alkalinity between 20.000 and 100.000 mg/l as CaCOs.

The absorption stage a) and the subsequent desorption stage b) are both being operated with a carbonates-bicarbonates solution, from now on referred as "the solution". To operate with pH values in these intended ranges, the solution must have a certain buffer capacity, which is obtained with a total carbonate alkalinity between 20.000 and 100.000 mg/l as CaCOs, preferably between 30.000 and 50.000 mg/l as CaCOs. A schematic diagram of the process is shown in figure 2, wherein it can be seen that the absorption stage of the biogas flow is carried out in a counter-current flow configuration. "Counter-current flow configuration" entails that the flows of biogas (1) to be purified and the carbonates-bicarbonates solution (14 at the second sub-stage, 19 at the first sub-stage) go in counter-current direction. In other words, the flow of raw biogas to be upgraded (1) enters the first, pre-conditioning absorption sub-stage (20) and exits as biomethane (2) from the second absorption sub-stage (20'), after being confronted with the (lean CO₂) solution flow (14), that comes out from the second desorption sub-stage (30') and enters the second absorption sub-stage (20') in counter-current to biogas. After being enriched in CO₂, the solution flow (9) comes out from the first absorption sub-stage (20). This way, the biogas flow (18) coming out from the first absorption sub-stage (20) enters the second absorption sub-stage (20'), while the solution flow (19) coming out from the second absorption sub-stage (20') enters the first absorption sub-stage (20) in counter-current. In the context of the present invention, "rich CO₂" solution (9) or CO₂-enriched solution means that the carbonates-bicarbonates solution has been enriched (by transfer) with the CO₂ previously contained the flow of biogas (1) at the entrance.

The process is carried out in various enchained sub-stages (that finally seems as a circular process, see figures 2 and 3), wherein one of the absorption sub-stages and one of the desorption sub-stages are for pre-conditioning the flows of raw biogas and solution, respectively, before the main absorption and desorption reactions. "Pre-conditioning" means that the pH of the "rich CO₂" solution (9) is in the range 7.5 to 8.2 before entering in the first desorption sub-stage (30), and the pH of the "lean CO₂" solution (14) is in the range 8.4 to 9.7 before entering the second absorption sub-stage (20'). A technical explanation for the need of pre-conditioning is given below.

Carbon dioxide is found in water in a bound, semi-bound and free form. The bound form includes carbonate ions (CO₃²⁻), semi-bound bicarbonate ions (HCO₃⁻), and free form carbonic acid dissolved (H₂CO₃), as well as gaseous (CO₂). These forms of carbon dioxide are present in water in a certain balance, in such a way that the total amount of carbon dioxide in water is defined as the sum of all three forms shown in Eq. (3):

ΣCO₂ =CO₂ + H₂CO₃ + HCO₃ + CO₃²⁻ (3)

The percentage of concentrations of various forms of carbon dioxide depends on the pH value of water. Thus, when the pH value of water is at pH=8.4 and ambient temperature is 25°C, only bicarbonate ion exists and there is practically no free form of CO₂ in the water, whilst carbonate ion begins to appear when pH is equal or greater than 8.4.

In the present invention, desorption is based on air stripping with a flow of air (30, 20'), which is a simple process. Only dissolved CO₂ (also named 'free' CO₂) can be removed by air stripping from water, thus in the invention the stripping process should be operated at a final pH below 8.4.

On the contrary, CO₂ absorption rate in water increases with increasing pH. That is the reason why the final pH of the carbonates-bicarbonates absorbing solution must be equal or greater than 8.2 to be practical at the second absorption sub-stage, which is similar to that of the pre-conditioning desorption sub-stage.

In the present invention, two or more sub-stages (20, 20') are used in the absorption stage, and two or more sub-stages (30, 30') are needed in the desorption stage (figure 2 shows the balance of pH ranges) to operate with different ranges of pH. In order to match the intended differences in the pH values between absorption and desorption stages, the first absorption sub-stage (20) has a pH below 8.2, preferably ranging from 7.5 to 8.2 and is used as a pre-conditioning stage previous to the second, subsequent absorption substage (20'), which is the main absorption stage, having a pH equal to or greater than 8.2, preferably ranging from 8.2 to 9.5. Said pH range is more suitable to absorption process, as explained above.

CO₂ desorption stage comprises two or more sub-stages (30, 30'). The first desorption sub-stage (30) starts with the CO₂-enriched solution (9) coming from the first absorption sub-stage (20), that is fed preferably by gravity (i.e. without pumping means).The first desorption sub-stage (30) has a pH greater than 7.7, preferably ranging from 7.7 to 8.4, in such a way that said enriched-CO₂ solution (14) is suitable for CO₂ and H₂S stripping by air flow (42). The first, main desorption sub-stage (30) produces a solution flow (31), that is fed into the second desorption sub-stage (30') for pre-conditioning. The second desorption sub-stage (30') also having CO₂ stripping by air flow (42'), is carried out at a pH equal to or greater than 8.4, preferably ranging from 8.4 to 9.7, since it is a pre-conditioning phase for the solution to be adapted to a more suitable absorption pH range previous to sending it back to the absorption stage as "lean CO₂" solution (14), preferably through a pump (13). At this pre-conditioning desorption sub-stage, since the pH is greater than 8.4, there is very little free CO₂ left and it is very difficult to remove it with stripping, although it can still be removed with additional air flow and proper hydraulic residence time, as long as the values defined in the invention are used. In the context of the present invention, "lean CO₂" solution (14) refers to the solution obtained from the pre-conditioning desorption sub-stage (30'), that is impoverished back to its original CO₂ content through the process of desorption or stripping, wherein the CO₂ is removed from the solution, prior to enrichment with CO₂ at the absorption stage.

In a preferred embodiment, both absorption and desorption stages comprise three or more absorption sub-stages and three or more desorption sub-stages. In this embodiment, only one absorption sub-stage (20) and only one desorption sub-stage (30) is for pre-conditioning of the gas and the solution, respectively, in such a way that:
- the pre-conditioning sub-stage is carried out with the same pH conditions already stated above; and
- the pH range disclosed for the main absorption (20') and desorption (30) sub-stages is spread over the different sub-stages added to the process. That is to say, the pH range from 8.2 to 9.5 of the second (main) absorption sub-stage (20') and the pH range from 7.7 to 8.4 of the first (main) desorption sub-stage (30) would be spread over the number of non-preconditioning sub-stages included in the process.

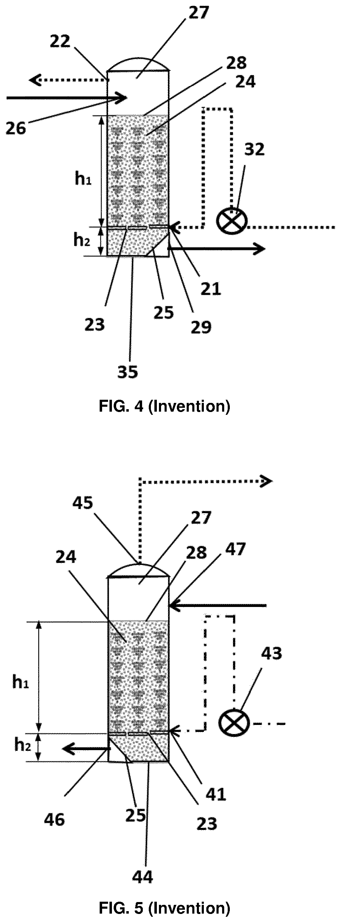

Each absorption sub-stage (20, 20') has the following design parameters:
- Hydraulic residence time (HRT) of the solution flow in each sub-stage (20, 20') between 1 and 8 minutes, preferably between 2 and 5 minutes. HRT calculation use the hydraulic retention time formula "HRT = V/Q." where V is volume of the absorption column (35 in figure 4), and Q is the inlet solution flow (14, 19) rate. Provided an inlet solution flow rate, HRT value determines absorption volume. Conventional means for measuring pH, temperature and pressure are used.
- Liquid/gas ratio (L/G) between 0.2 and 2, preferably between 0.8 and 1.2. L/G ratio is the liquid solution flow divided by raw biogas flow. This ratio is used to calculate the solution flow rate from the raw biogas flow rate to be upgraded. Conventional means for measuring de flows (flow meters) are used.

Each desorption sub-stage (30, 30') has the following design parameters:
- Hydraulic residence time (HRT) of the solution in each sub-stage (20, 20') between 2 and 15 minutes, preferably between 5 and 10 minutes. HRT determines absorption volume. Conventional means for measuring pH, temperature and pressure are used.
- Air/liquid ratio (A/L) between 5 and 30, preferably between 8 and 12. A/L ratio is the air flow divided by the solution flow. This ratio is used to calculate the air flow rate from the solution flow rate. Conventional means for measuring de flow (flow meters) are used.

In the method of the invention, any pre-cleaning stage, such as H₂S pre-cleaning commonly used in the prior art, is eliminated -not needed- (i.e. the process is carried out in the absence of any pre-cleaning stage). The main advantage is that, the absorption/desorption process of the invention avoids the need of a pre-cleaning stage of H₂S, and yet achieves high hydrogen sulfide (H₂S) removal from the biogas flow, because:
- the process operates at ambient (room) temperature and atmospheric pressure, preventing corrosion and mechanical wear of sensitive equipment uses in the prior art, like high pressure pumps and compressors; and
- the liquid to gas ratio and the pH range disclosed for the claimed process also achieves the removal of H₂S, since H₂S gas is more soluble in the solution than CO₂ under those conditions.

The unit of the present invention for purifying a flow of raw biogas following the method described above comprises (see figures 4, 5 and 6):
- two or more high mass transfer bubble columns (35) for absorption, configured to wash the biogas flow with a carbonates-bicarbonates solution in a counter-current mode; each absorption column (35) having:
   ∘ an inlet biogas pipe (21) at the bottom of the column (35) the inlet biogas pipe (21) being connected to a blower (32) for the biogas injection;
   ∘ a plurality of fine-bubble diffusers (23) inside the column (35), connected to the inlet (21) and located at a distance h2 between 0.5 and 1.5 m to the bottom, preferably between 0.8 and 1 m, for the upward injection of the biogas flow. This is a distance long enough to avoid the carbonates-bicarbonates solution to drag fine bubbles out of the column (35);
   ∘ a solution inlet pipe (26) for injecting the solution inside the column (35), in a head space (27) located in the upper part above a solution level (28), said level (28) having a height h1 between 2 and 6 m, preferably between 2.5 and 4 m;
   ∘ a biogas outlet pipe (22) for extracting the biogas at the head space (27);
   ∘ a solution outlet pipe (29) at the bottom of the column (35), for extracting the solution enriched with CO₂;
   ∘ a plastic media (24) filling the inner volume of the column (43), consisting in a plurality of plastic elements (for instance, rings) configured to move freely within the column volume;
   ∘ a plurality of perforated plates (25) adjacent to the solution outlet pipe (29) configured to avoid the plastic media (24) from exiting outside the column (35);
- two or more high-mass transfer bubble columns (44) for desorption of CO₂, configured to regenerate the enriched CO₂ solution in a counter-current mode by air stripping; each desorption column (44) having:
   ∘ a solution inlet pipe (47) at the top of the column (44) for the downward injection of the solution coming from the absorption column (35) by gravity (i.e. without the pumping means), the solution inlet pipe (47) being connected in a head space (27) located in the upper part above a solution level (28), said level (28) having a height h1 between 2 and 6 m, preferably between 2.5 and 4 m;
   ∘ an air inlet pipe (41) at the bottom of the column (44) for the upward injection of air flow, being connected to a blower (43) for air injection;
   ∘ a plurality of fine-bubble diffusers (23) inside the column (44), connected to the air inlet pipe (41) and located at a distance h2 between 0.5 and 1.5 m to the bottom of the column (44), preferably between 0.8 and 1 m, for the upward injection of the air flow; this is a distance long enough to avoid the carbonates-bicarbonates solution to drag fine bubbles out of the column;
   ∘ an off-gas outlet pipe (45) at the head space (27);
   ∘ a solution outlet pipe (46) at the bottom of the column (44), for extracting the solution after CO₂ removal;
   ∘ a plastic media (24) filling the inner volume of the column (44), consisting in a plurality of plastic elements (for instance, rings) configured to move freely within the column volume;
   ∘ a plurality of perforated plates (25) adjacent to the solution outlet pipe (46) configured to avoid the plastic media (24) from exiting the column (44);
- control means for controlling the flow of biogas at the absorption column (35), the control means comprising a digital pressure gauge (40) connected to the head space (27) of each absorption column (35) for monitoring and transmitting gas pressure measurements by means of a Programmable Logic Controller (PLC) to act over the blowers (32) that extract the biogas flow from each column (35) and inject it into the next column, varying the flow rate according to the pressure to keep that pressure at a constant value which is atmospheric pressure. In this way, the entire biogas flow which comes out from each column is sent to the next, adjacent column (35);
   and
- control means for responding to changes in environmental conditions, comprising:
   ∘ a CO₂ gas analyzer (36) configured to measure CO₂ concentration in the biomethane flow (2) resulting from the second absorption column (35), to maintain said CO₂ concentration below 2 mol %. The CO₂ gas analyzer (36) is connected to and act over a lean CO₂ solution pump (13) located at the solution outlet pipe (46) of the second desorption by means of a Programmable Logic Controller (PLC), increasing the solution flow (14) rate and therefore increasing L/G ratio. L/G ratio is directly related to CO₂ removal efficiency;
   ∘ a plurality of pH analyzers (37, 37') at the solution outlets (46) of the desorption columns (44) configured to measure the pH level in the solution flows (14, 31) and transmit the measurement to a PLC. When pH value is out of the required range, the analyzer (37) of the solution flow between sub-stages (31) acts over the air blower (43) of the first desorption sub-stage (30) and the pH analyzer (37) of solution flow (14) coming out from the second desorption sub-stage (30') acts over the air blower (43') of the second desorption sub-stage (30') by means of a Programmable Logic Controller (PLC), for increasing the air flow (42,42') rate if the pH value is lower than the lower limit of the required range, and for lowering the air flow (42, 42') rate if the pH value is higher than the upper limit of the required range; and
   ∘ an O₂ gas analyzer (38) configured to measure the O₂ concentration in the biomethane flow (2) exiting the second absorption sub-stage (20'), which must be equal or lower than 0.3 mol %. The invention holds the O₂ concentration below this limit most of the time, but whenever L/G ratio is close to its upper limit, sometimes it does not. In such cases, the gas analyzer (38) acts over an oxygen scavenger dosing pump (39) by means of a Programmable Logic Controller (PLC), which is configured to inject oxygen scavenger into the lean CO₂ solution flow (14) exiting the second desorption sub-stage (30'). Chemically, different types of oxygen scavengers can be used for removing the oxygen from water such as sodium sulfite (Na₂ SOs) or sodium bisulfite (NaHSOs).

The plastic elements (24) contained in all the absorption and desorption columns of the unit are for instance those by MTE Group, preferably the commercially available 1" Pall rings with a volume vp of plastic media divided by volume vs of solution in the bubble column (vp/vs) between 5% (vp/vs) and 25% (vp/vs), preferably between 10 % (vp/vs) and 20% (vp/vs), which improve the mass transfer in the bubble column (35, 44). The mass transfer is improved by these plastic rings due to reduction in bubble size by bubble breaking and the decrease of the bubble rising velocity. The presence of these plastics elements (24) around the liquid (i.e. the solution) inside the column enhances the transfer of gas in the liquid as the bubbles stick to the plastics and break into smaller bubbles when they hit the plastics. For that reason, the column (35, 44) comprises a plurality of perforated plates (25) at the bottom, adjacent to the exit for the solution, configured to avoid plastics rings (the filler 24) going out from the bubble column (35, 44) through the liquid flow outlet (29, 46).

In a particular embodiment, the claimed unit comprises three or more absorption columns (35) and three or more desorption columns (44), which allows for greater efficiencies, although two absorption columns and two desorption columns are enough to meet the minimum requirements of the invention.

The upgraded/washed biogas (2) coming out from the second absorption sub-stage (20') may still show a certain amount of H₂S and/or an important amount of water that should be removed to obtain a biogas with quality for gas grid injection (8). Therefore, in a preferred embodiment, the method may comprise a further polishing stage, after the absorption stage. With this aim, a preferred embodiment of the unit for cleaning and upgrading biogas may comprise polishing means for further cleaning the upgraded biogas flow (2) after exiting the second absorption column (35) and before injecting the gas flow into a gas grid (8). This is a final polishing step, as commonly described in prior art; the polishing means preferably includes a condensate separator (5) and a gas drying and purification device (6), comprising a plurality of absorption filters with layers of a material that can be regenerated by i.e. heating or a decrease in pressure, said materials being selected from the group consisting of: silica gel, molecular sieves (zeolites) and/or activated carbon, or any combination thereof. As stated, the polishing means can be included in the unit whenever the upgraded biogas is still unsuitable for injection into the gas grid (8), that is to say whenever the biogas still shows e.g. a total sulphur > 20 mg/Nm3 and water dew point higher than -10°C at 200 bar, according to ISO 6327 and amounts of siloxanes < 10 mg/m3.

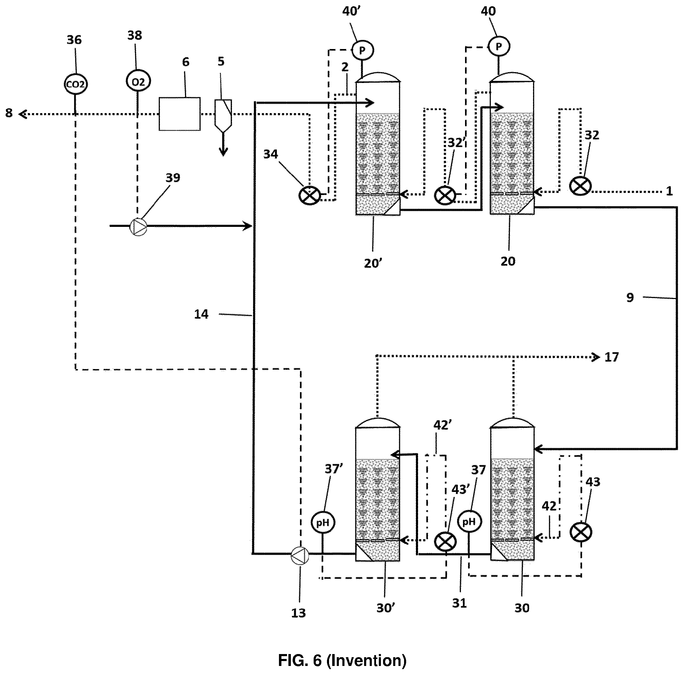

The unit also comprises control means for responding to changes in environmental conditions (see also figure 6). Unlike the well-known processes, the absorption/desorption actions of the present invention are configured to operate at ambient temperature and atmospheric pressure. As already stated, "ambient temperature" is understood in the context of the present invention as being without heating nor cooling, having the same temperature that ambient conditions, between 5 °C and 35°C. Besides, "atmospheric pressure" is understood in the context of the present invention as bubble column not being pressurized, thus having the same pressure than the atmosphere. It is obvious to state that said parameters change throughout the year, thus affecting gases solubility and consequently the efficiency of the processes. To sum up, the advantages of the present invention, both device and method for using thereof, are the following:
- A (very low) energy consumption, equal or lower than 0.2 kWh/Nm³, since it is a non-pressurized, non-heated system, wherein the water absorption and desorption occur by gravity, no water-cooling requirements are used, no heat demand is needed for regeneration and low-pressure biogas blowers are used.
- No hydrogen sulphide pre-cleaning is required since mechanical equipment with corrosion problems is avoided and simultaneous H₂S and CO₂ removal is carried out in the absorption process.
- No clogging by bacterial growth and elemental sulphur precipitation occur, since no packing is used.
- No heat requirement is needed for regeneration.
- Low capital cost, even for small flows down to 1 m³/h to large flows up to 2,000 m³/h, by a quite simple system and process with very little equipment running at ambient temperature and atmospheric pressure (low pressure blowers, a pump, fine bubble diffusers and final polishing stage, which makes the system feasible for small scale installations (<100 Nm³/h biogas).
- Obtaining biomethane having a quality suitable for injection into the natural gas grid with the following minimum requirements:
   - Methane > 95 mol %;
   - Carbon dioxide < 2 mol %,
   - Oxygen < 0.3 mol%.
   - Total sulphur < 20 mg/Nm3
   - Water dew point lower than -10°C at 200 bar; and
   - Siloxanes<10 mg/m3.

### BRIEF DESCRIPTION OF THE DRAWINGS

**Figure 1** **(Prior art) illustrates a schematic representation of biogas upgrading by hot potassium carbonate process**
   1. Raw inlet biogas flow
   2. Biomethane flow to purification
   3. Pre-cleaning stage: Sulphide and moisture removal filter
   4. High pressure compressor
   5. Condensate separator 1
   6. Gas and drying and purification device
   7. Absorption packed column
   8. Biomethane to gas grid injection.
   9. Rich CO2 solution flow
   10. Flash vessel
   11. Desorption packed column
   12. Heating solution.
   13. Lean CO2 solution pump
   14. Lean CO2 solution flow
   15. CO2 cooler
   16. Condensate separator 2
   17. Off gas flow.
**Figure 2** **(present invention) illustrates a schematic representation of absorption and desorption processes showing variations in pH ranges**
   1. Raw inlet biogas flow
   2. Biomethane flow to purification
   9. Rich CO₂ solution flow
   13. Lean CO₂ solution pump
   14. Lean CO₂ solution flow
   20. First absorption sub-stage
   20'. Second absorption sub-stage
   30. First desorption sub-stage
   30'. Second desorption sub-stage
   42. Air flow to the first desorption sub-stage
   42'. Air flow to the second desorption sub-stage
**Figure 3** **(present invention) illustrates a schematic representation of the overall process of the present invention**
   1. Raw inlet biogas flow
   2. Biomethane flow to purification
   5. Condensate separator.
   6. Gas drying and purification device.
   8. Biomethane flow to gas grid injection.
   9. Rich CO₂ solution flow
   13. Lean CO₂ solution pump
   14. Lean CO₂ solution flow
   17. Off-gas flow
   18. Biogas flow between sub-stages
   19. Solution flow between sub-stages
   20. First absorption sub-stage
   20'. Second absorption sub-stage
   30. First desorption sub-stage
   30'. Second desorption sub-stage
   31. Outlet solution flow between desorption sub-stages 30 and 30'
   34. Blower for biomethane flow
   42. Air flow to the first desorption sub-stage
   42'. Air flow to the second desorption sub-stage
   The dotted line represents the gas flow; the solid line represents the solution flow; and the loosely dash dotted line represents the air flow.
**Figure 4** **(present invention) illustrates a schematic representation of an absorption sub-stage of the present invention**
   21. Biogas inlet pipe
   22. Biogas outlet pipe
   23. Fine bubble diffusers
   24. Plastic rings
   25. Perforated plate
   26. Solution inlet pipe
   27. Bubble column head space
   28. Solution level in the bubble column
   29. Solution outlet pipe
   32. Biogas blower of absorption sub-stage
   35. Absorption column
   The dotted line represents the gas flow and the solid line represents the solution flow.
**Figure 5** **(present invention) illustrates a schematic representation of a desorption sub-stage of the present invention**
   23. Fine bubble diffusers
   24. Plastic rings
   25. Perforated plate
   27. Bubble column head space
   28. Solution level in the bubble column 30. Desorption sub-stage
   41. Air inlet pipe
   43. Air blower of desorption substage
   44. Desorption column
   45. Off-gas outlet pipe
   46. Solution outlet pipe
   47. Solution inlet pipe
   The dotted line represents the gas flow; the solid line represents the solution flow; and the loosely dash dotted line represents the air flow.
**Figure 6** **(present invention) illustrates a schematic representation of control means of the present invention**
   1. Raw inlet biogas flow
   2. Biomethane flow to purification
   5. Condensate separator
   6. Gas drying and purification device
   8. Biomethane to gas grid injection
   9. Rich CO₂ solution flow
   13. Lean CO₂ solution pump
   14. Lean CO₂ solution flow
   17. Off-gas flow
   32. Biogas injection blower to first absorption sub-stage
   32'. Biogas injection blower to second absorption sub-stage
   20. First absorption sub-stage
   20'. Second absorption sub-stage
   30. First desorption sub-stage
   30'. Second desorption sub-stage
   31. Solution flow between sub-stages 30 and 30'
   34. Blower for biomethane
   36. CO₂ gas analyzer
   37. pH analyzer of the first desorption sub-stage
   37'. pH analyzer of second desorption sub-stage
   38. O₂ gas analyzer
   39. Oxygen scavenger dosing pump
   40. Digital pressure gauge in the first absorption column
   40'. Digital pressure gauge in the second absorption column
   42. Air flow to the first desorption sub-stage
   42'. Air flow to the second desorption sub-stage
   43. Air blower of the first desorption sub-stage
   43'. Air blower of the second desorption sub-stage
   The dotted line represents the gas flow; the solid line represents the solution flow; the loosely dash dotted line represents the air flow; and the dash line represents the electrical control line.

## Claims

1. A method for cleaning and upgrading biogas through carbonates absorption-desorption stages, to obtain high-quality biomethane for being injected into a natural gas grid, comprising the following steps:
a) an absorption stage, consisting of two or more sequential sub-stages (20, 20'), wherein:
∘ a flow (1) of raw biogas to be upgraded is subjected to a first absorption sub-stage (20) at a pH lower than 8.2, for biogas pre-conditioning, using a counter-current flow of a carbonates-bicarbonates solution (19), the first sub-stage resulting in a flow of enriched biogas (18) and a flow of carbonates-bicarbonates solution enriched with CO₂ (9);
and
∘ the flow of enriched biogas (18) extracted from the first sub-stage (20) is subjected to a second absorption sub-stage (20') at a pH equal to or greater than 8.2, using a counter-current flow of a carbonates-bicarbonates solution (14); the second absorption sub-stage (20') resulting in a flow of biomethane (2) to purification and the carbonates-bicarbonates solution flow (19) that is sent in counter-current to the first absorption sub-stage (20);
b) a CO₂ desorption stage, consisting of two or more sequential sub-stages (30, 30'), wherein:
∘ the carbonates-bicarbonates solution enriched with CO₂ (9) at the first absorption sub-stage (20) is directed to a first desorption sub-stage (30) by air stripping with an air flow (42), at a pH below 8.4, resulting in a flow of carbonates-bicarbonates solution (31) having a reduced CO₂ content with respect to the inlet solution flow;
and
∘ the flow of carbonates-bicarbonates solution (31) obtained from the first desorption sub-stage (30) is subjected to a second desorption sub-stage (30') by air stripping with an air flow (42') at a pH equal to or greater than 8.4, for solution pre-conditioning, resulting in a carbonates-bicarbonates lean-CO₂ solution (14) that is sent to the second absorption sub-stage (20') in counter-current;
c) a controlling stage of the flow of biogas at the absorption stage, comprising:
∘ measuring the gas pressure at the absorption sub-stages (20, 20'), and
∘ acting over the flow of biogas injected into the absorption sub-stages (20, 20') by varying the flow rate according to the gas pressure, in order to keep the pressure at a constant value which is atmospheric pressure;
and
d) a controlling stage for adapting the absorption stage a) and the desorption stage b) to environmental conditions, comprising:
∘ measuring CO₂ concentration in the biomethane flow (2) resulting from the second absorption stage (20');
∘ acting over the solution flow (14) exiting the second desorption sub-stage (30') for increasing or decreasing the L/G ratio, by increasing or decreasing the solution flow (14) rate in order to maintain the CO₂ concentration below 2 mol % in the biomethane flow (2);
∘ measuring the pH in the solution flows (14, 31) resulting from the desorption sub-stages (30, 30') for increasing the air flow (42, 42') rate if the pH value is lower than the lower limit of the required range, and for lowering the air flow (42, 42') rate if the pH value is higher than the upper limit of the required range;
∘ measuring the O₂ concentration in the biomethane flow (2) exiting the second absorption sub-stage (20'), which must be equal or lower than 0.3 mol %; and
∘ removing O₂ content from the lean CO₂ solution flow (14) exiting the second desorption sub-stage (30'), when the O₂ concentration in the biomethane flow (2) reaches or is higher than 0.3 mol %;
wherein the absorption (20, 20') and the desorption sub-stages (30, 30') are carried out at room temperature and atmospheric pressure, and the carbonates-bicarbonates solution (14) has a total carbonate alkalinity between 20.000 and 100.000 mg/l as CaCOs.

2. The method of claim 1, wherein:
- the pH at the first absorption sub-stage (20) ranges from 7.5 to 8.2;
- the pH at the second absorption sub-stage (20') ranges from 8.2 to 9.5;
- the pH at the first desorption sub-stage (30) ranges from 7.7 to 8.4; and
- the pH at the second desorption sub-stage (30') ranges from 8.4 to 9.7.

3. The method of any one of claims 1 or 2, wherein the total carbonate alkalinity is between 30.000 and 50.000 mg/l as CaCOs.

4. **The** method of any one of claims 1 to 3, wherein hydraulic residence time of the solution in the absorption sub-stages (20, 20') is between 1 and 8 minutes, and the liquid/gas ratio (L/G) is between 0.2 and 2; and wherein hydraulic residence time of the solution in the desorption sub-stages (30, 30') is between 2 and 15 minutes, and the liquid/gas ratio (L/G) is between 5 and 30.

5. The method of any one of claims 1 to 4, wherein the absorption stage a) comprises three or more sequential absorption sub-stages, and the desorption stage b) comprises three or more sequential desorption sub-stages.

6. The method of any one of claims 1 to 5, comprising a polishing stage consisting of further cleaning the biogas flow (2) upgraded after exiting the absorption stage a) and before injecting said biogas flow (2) into a gas grid (8).

7. A unit for purifying a flow of raw biogas (1) following the method disclosed in any one of claims 1 to 6, **characterized in that** the unit comprises:
- two or more high mass transfer bubble columns (35) for absorption, configured to wash the biogas flow with a carbonates-bicarbonates solution in a counter-current mode; each absorption column (35) having:
∘ an inlet biogas pipe (21) at the bottom of the column (35), the inlet biogas pipe (21) being connected to a blower (32) for the biogas injection;
∘ a plurality of fine-bubble diffusers (23) inside the column (35), connected to the inlet (21) and located at a distance h2 between 0.5 and 1.5 m to the bottom for the upward injection of the biogas flow;
∘ a solution inlet pipe (26) for injecting the solution inside the column (35), in a head space (27) located in the upper part above a solution level (28), said level (28) having a height h1 between 2 and 6 m;
∘ a biogas outlet pipe (22) for extracting the biogas at the head space (27);
∘ a solution outlet pipe (29) at the bottom of the column (35), for extracting the solution enriched with CO₂;
∘ a plastic media (24) filling the inner volume of the column (43), consisting in a plurality of plastic elements configured to move freely within the column volume;
∘ a plurality of perforated plates (25) adjacent to the solution outlet pipe (29) configured to avoid the plastic media (24) from exiting outside the column (35);
- two or more high mass transfer bubble columns (44) for desorption of CO₂, configured to regenerate the enriched CO₂ solution in a counter-current mode by air stripping; each desorption column (44) having:
∘ a solution inlet pipe (47) at the top of the column (44) for the downward injection of the solution coming from the absorption column (35), the solution inlet pipe (47) being connected in a head space (27) located in the upper part above a solution level (28), said level (28) having a height h1 between 2 and 6 m;
∘ an air inlet pipe (41) at the bottom of the column (44) for the upward injection of air flow, being connected to a blower (43) for air injection;
∘ a plurality of fine-bubble diffusers (23) inside the column (44), connected to the air inlet pipe (41) and located at a distance h2 between 0.5 and 1.5 m to the bottom of the column (44) for the upward injection of the air flow;
∘ an off-gas outlet pipe (45) at the head space (27);
∘ a solution outlet pipe (46) at the bottom of the column (44), for extracting the solution after CO₂ removal;
∘ a plastic media (24) filling the inner volume of the column (44), consisting in a plurality of plastic elements configured to move freely within the column volume;
∘ a plurality of perforated plates (25) adjacent to the solution outlet pipe (46) configured to avoid the plastic media (24) from exiting the column (44);
- control means for controlling the flow of biogas at the absorption column (35), the control means comprising a digital pressure gauge (40) connected to the head space (27) of each absorption column (35) for monitoring and transmitting gas pressure measurements by means of a Programmable Logic Controller (PLC) to act over the blowers (32) that extract the biogas flow from each column (35) and inject said flow into the next column, varying the flow rate according to the pressure to keep that pressure at a constant value which is atmospheric pressure;
and
- control means for responding to changes in environmental conditions, comprising:
∘ a CO₂ gas analyzer (36) configured to measure CO₂ concentration in the biomethane flow (2) resulting from the second absorption column (35), to maintain said CO₂ concentration below 2 mol %; the CO₂ gas analyzer (36) being connected to a lean CO₂ solution pump (13) located at the solution outlet pipe (46) of the second desorption column (44) by means of a Programmable Logic Controller (PLC), configured to control the solution flow (14) rate and the L/G ratio;
∘ a plurality of pH analyzers (37, 37'), each one located at the solution outlet pipe (46) of each desorption column (44), configured to measure the pH level in the solution flows (14, 31) and to transmit the measurement to a PLC; said PLC being connected to the air blower (43) of the first desorption column (44) and to the air blower (43') of the second desorption column (44); and
∘ an O₂ gas analyzer (38) configured to measure the O₂ concentration in the biomethane flow (2) exiting the second absorption column (35), said analyzer (38) being connected to an oxygen scavenger dosing pump (39) by means of a Programmable Logic Controller (PLC), which is configured to inject oxygen scavenger into the lean CO₂ solution flow (14) exiting the second desorption column (44).

8. The unit according to claim 7, comprising three or more absorption columns (35) and three or more desorption columns (44).

9. The unit according to any one of claims 7 or 8, comprising polishing means connected to the biogas outlet pipe (22) of the second absorption column (35) for cleaning the biogas flow (2) upgraded after exiting said column (35) and before entering the gas grid (8).

10. The unit according to claim 9, wherein the polishing means includes a condensate separator (5) and a gas drying and purification device (6) comprising a plurality of absorption filters.

## Amended claims

### Amended claims in accordance with Rule 137(2) EPC.

1. A method for cleaning and upgrading biogas through carbonates absorption-desorption stages, to obtain high-quality biomethane for being injected into a natural gas grid, comprising the following steps:
a) an absorption stage, consisting of two or more sequential sub-stages (20, 20'), wherein:
∘ a flow (1) of raw biogas to be upgraded is subjected to a first absorption sub-stage (20) at a pH lower than 8.2, for biogas pre-conditioning, using a counter-current flow of a carbonates-bicarbonates solution (19), the first sub-stage resulting in a flow of enriched biogas (18) and a flow of carbonates-bicarbonates solution enriched with CO₂ (9);
and
∘ the flow of enriched biogas (18) extracted from the first sub-stage (20) is subjected to a second absorption sub-stage (20') at a pH equal to or greater than 8.2, using a counter-current flow of a carbonates-bicarbonates solution (14); the second absorption sub-stage (20') resulting in a flow of biomethane (2) to purification and the carbonates-bicarbonates solution flow (19) that is sent in counter-current to the first absorption sub-stage (20);
b) a CO₂ desorption stage, consisting of two or more sequential sub-stages (30, 30'), wherein:
∘ the carbonates-bicarbonates solution enriched with CO₂ (9) at the first absorption sub-stage (20) is directed to a first desorption sub-stage (30) by air stripping with an air flow (42), at a pH below 8.4, resulting in a flow of carbonates-bicarbonates solution (31) having a reduced CO₂ content with respect to the inlet solution flow;
and
∘ the flow of carbonates-bicarbonates solution (31) obtained from the first desorption sub-stage (30) is subjected to a second desorption sub-stage (30') by air stripping with an air flow (42') at a pH equal to or greater than 8.4, for solution pre-conditioning, resulting in a carbonates-bicarbonates lean-CO₂ solution (14) that is sent to the second absorption sub-stage (20') in counter-current;
c) a controlling stage of the flow of biogas at the absorption stage, comprising:
∘ measuring the gas pressure at the absorption sub-stages (20, 20'), and
o acting over the flow of biogas injected into the absorption sub-stages (20, 20') by varying the flow rate according to the gas pressure, in order to keep the pressure at a constant value which is atmospheric pressure;
and
d) a controlling stage for adapting the absorption stage a) and the desorption stage b) to environmental conditions, comprising:
o measuring CO₂ concentration in the biomethane flow (2) resulting from the second absorption stage (20');
o acting over the solution flow (14) exiting the second desorption sub-stage (30') for increasing or decreasing the L/G ratio, by increasing or decreasing the solution flow (14) rate in order to maintain the CO₂ concentration below 2 mol % in the biomethane flow (2);
o measuring the pH in the solution flows (14, 31) resulting from the desorption sub-stages (30, 30') for increasing the air flow (42, 42') rate if the pH value is lower than the lower limit of the required range, and for lowering the air flow (42, 42') rate if the pH value is higher than the upper limit of the required range;
o measuring the O₂ concentration in the biomethane flow (2) exiting the second absorption sub-stage (20'), which must be equal or lower than 0.3 mol %; and
o removing O₂ content from the lean CO₂ solution flow (14) exiting the second desorption sub-stage (30'), when the O₂ concentration in the biomethane flow (2) reaches or is higher than 0.3 mol %;
wherein the absorption (20, 20') and the desorption sub-stages (30, 30') are carried out at room temperature and atmospheric pressure, and the carbonates-bicarbonates solution (14) has a total carbonate alkalinity between 20.000 and 100.000 mg/l as CaCOs.

2. The method of claim 1, wherein:
- the pH at the first absorption sub-stage (20) ranges from 7.5 to 8.2;
- the pH at the second absorption sub-stage (20') ranges from 8.2 to 9.5;
- the pH at the first desorption sub-stage (30) ranges from 7.7 to 8.4; and
- the pH at the second desorption sub-stage (30') ranges from 8.4 to 9.7.

3. The method of any one of claims 1 or 2, wherein the total carbonate alkalinity is between 30.000 and 50.000 mg/l as CaCOs.

4. The method of any one of claims 1 to 3, wherein hydraulic residence time of the solution in the absorption sub-stages (20, 20') is between 1 and 8 minutes, and the liquid/gas ratio (L/G) is between 0.2 and 2; and wherein hydraulic residence time of the solution in the desorption sub-stages (30, 30') is between 2 and 15 minutes, and the liquid/gas ratio (L/G) is between 5 and 30.

5. The method of any one of claims 1 to 4, wherein the absorption stage a) comprises three or more sequential absorption sub-stages, and the desorption stage b) comprises three or more sequential desorption sub-stages.

6. The method of any one of claims 1 to 5, comprising a polishing stage consisting of further cleaning the biogas flow (2) upgraded after exiting the absorption stage a) and before injecting said biogas flow (2) into a gas grid (8).

7. A unit for purifying a flow of raw biogas (1) following the method disclosed in any one of claims 1 to 6, **characterized in that** the unit comprises:
- two or more high mass transfer bubble columns (35) for absorption, configured to wash the biogas flow with a carbonates-bicarbonates solution in a counter-current mode; each absorption column (35) having:
o an inlet biogas pipe (21) at the bottom of the column (35), the inlet biogas pipe (21) being connected to a blower (32) for the biogas injection;
o a plurality of fine-bubble diffusers (23) inside the column (35), connected to the inlet (21) and located at a distance h2 between 0.5 and 1.5 m to the bottom for the upward injection of the biogas flow;
o a solution inlet pipe (26) for injecting the solution inside the column (35), in a head space (27) located in the upper part above a solution level (28), said level (28) having a height h1 between 2 and 6 m;
o a biogas outlet pipe (22) for extracting the biogas at the head space (27);
o a solution outlet pipe (29) at the bottom of the column (35), for extracting the solution enriched with CO₂;
o a plastic media (24) filling the inner volume of the column (43), consisting in a plurality of plastic elements configured to move freely within the column volume;
o a plurality of perforated plates (25) adjacent to the solution outlet pipe (29) configured to avoid the plastic media (24) from exiting outside the column (35);
- two or more high mass transfer bubble columns (44) for desorption of CO₂, configured to regenerate the enriched CO₂ solution in a counter-current mode by air stripping; each desorption column (44) having:
∘ a solution inlet pipe (47) at the top of the column (44) for the downward injection of the solution coming from the absorption column (35), the solution inlet pipe (47) being connected in a head space (27) located in the upper part above a solution level (28), said level (28) having a height h1 between 2 and 6 m;
∘ an air inlet pipe (41) at the bottom of the column (44) for the upward injection of air flow, being connected to a blower (43) for air injection;
∘ a plurality of fine-bubble diffusers (23) inside the column (44), connected to the air inlet pipe (41) and located at a distance h2 between 0.5 and 1.5 m to the bottom of the column (44) for the upward injection of the air flow;
∘ an off-gas outlet pipe (45) at the head space (27);
∘ a solution outlet pipe (46) at the bottom of the column (44), for extracting the solution after CO₂ removal;
∘ a plastic media (24) filling the inner volume of the column (44), consisting in a plurality of plastic elements configured to move freely within the column volume;
∘ a plurality of perforated plates (25) adjacent to the solution outlet pipe (46) configured to avoid the plastic media (24) from exiting the column (44);
- control means for controlling the flow of biogas at the absorption column (35), the control means comprising a digital pressure gauge (40) connected to the head space (27) of each absorption column (35) for monitoring and transmitting gas pressure measurements by means of a Programmable Logic Controller (PLC) to act over the blowers (32) that extract the biogas flow from each column (35) and inject said flow into the next column, varying the flow rate according to the pressure to keep that pressure at a constant value which is atmospheric pressure;
and
- control means for responding to changes in environmental conditions, comprising:
∘ a CO₂ gas analyzer (36) configured to measure CO₂ concentration in the biomethane flow (2) resulting from the second absorption column (35), to maintain said CO₂ concentration below 2 mol %; the CO₂ gas analyzer (36) being connected to a lean CO₂ solution pump (13) located at the solution outlet pipe (46) of the second desorption column (44) by means of a Programmable Logic Controller (PLC), configured to control the solution flow (14) rate and the L/G ratio;
o a plurality of pH analyzers (37, 37'), each one located at the solution outlet pipe (46) of each desorption column (44), configured to measure the pH level in the solution flows (14, 31) and to transmit the measurement to a PLC; said PLC being connected to the air blower (43) of the first desorption column (44) and to the air blower (43') of the second desorption column (44); and
o an O₂ gas analyzer (38) configured to measure the O₂ concentration in the biomethane flow (2) exiting the second absorption column (35), said analyzer (38) being connected to an oxygen scavenger dosing pump (39) by means of a Programmable Logic Controller (PLC), which is configured to inject oxygen scavenger into the lean CO₂ solution flow (14) exiting the second desorption column (44).

8. The unit according to claim 7, comprising three or more absorption columns (35) and three or more desorption columns (44).

9. The unit according to claim 7, comprising polishing means connected to the biogas outlet pipe (22) of the second absorption column (35) for cleaning the biogas flow (2) upgraded after exiting said column (35) and before entering the gas grid (8).

10. The unit according to claim 8, comprising polishing means connected to the biogas outlet pipe (22) of the third or subsequent absorption column (35) for cleaning the biogas flow (2) upgraded after exiting said column (35) and before entering the gas grid (8).

11. The unit according to any one of claims 9 or 10, wherein the polishing means includes a condensate separator (5) and a gas drying and purification device (6) comprising a plurality of absorption filters.
